# EUROPEAN PATENT APPLICATION

(11) **EP 4 134 303 A1**
(43) Date of publication of application: **15.02.2023**
(21) Application number: 21784933.0
(22) Date of filing: 02.04.2021
(51) Int. Cl.: B64C 39/02, B64D 27/24, H04W 16/28, H01M 10/44, H02J 7/00, H04W 84/06, H01M 50/20

(54) **SYSTEM, PROGRAM, MANAGEMENT METHOD, AND FLIGHT VEHICLE**

(30) Priority: 07.04.2020 JP 2020068933
(71) Applicant: SoftBank Corp., Tokyo 105-7529 (JP)
(72) Inventor: SAITO, Takaya, Tokyo 105-7529 (JP); TAKAYANAGI, Yoshiki, Tokyo 105-7529 (JP); NISHIYAMA, Koji, Tokyo 105-7529 (JP)
(74) Representative: Michalski Hüttermann & Partner Patentanwälte mbB
(86) International application number: PCT/JP2021/014415
(87) International publication number: WO 2021/206031

(57) **Abstract**

Provided is a system including: a management unit configured to manage a plurality of battery packs connected in parallel, in which the management unit is configured to control the plurality of battery packs to cause the plurality of battery packs to be discharged alternately so that a discharge rate of each of the plurality of battery packs becomes higher than the discharge rate in a case of discharging all of the plurality of battery packs. The plurality of battery packs include a plurality of left-hand side battery packs and a plurality of right-hand side battery packs which are arranged to be bilaterally symmetric, and the management unit is configured to manage the plurality of battery packs to cause at least one of the plurality of battery packs in each of the plurality of left-hand side battery packs and the plurality of right-hand side battery packs to be discharged bilaterally symmetrically at a time in order.

## Description

### BACKGROUND

### 1. TECHNICAL FIELD

The present invention relates to a system, a program, a management method, and an aircraft.

### 2. RELATED ART

An apparatus that executes various operations by discharging electrical power of batteries at a relatively low discharge rate, such as HAPS (High Altitude Platform Station), has been known (see, for example, Patent Document 1).

### PRIOR ART DOCUMENT

### PATENT DOCUMENT

Patent Document 1: Japanese Patent Application Publication No. 2020-043494

### GENERAL DISCLOSURE

A first aspect of the present invention provides a system. The system may include a management unit configured to manage a plurality of battery packs connected in parallel. The management unit may be configured to manage the plurality of battery packs to cause the plurality of battery packs to be discharged alternately so that a discharge rate of each of the plurality of battery packs becomes higher than the discharge rate in a case of discharging all of the plurality of battery packs.

The plurality of battery packs may include a plurality of left-hand side battery packs and a plurality of right-hand side battery packs which are arranged to be bilaterally symmetric, and the management unit may be configured to manage the plurality of battery packs to cause at least one of the plurality of battery packs in each of the plurality of left-hand side battery packs and the plurality of right-hand side battery packs to be discharged bilaterally symmetrically at a time in order. The management unit may be configured to manage the plurality of battery packs to cause the plurality of battery packs to be discharged bilaterally symmetrically in order by a number corresponding to a type of cells included in the plurality of battery packs at a time, in the plurality of left-hand side battery packs and the plurality of right-hand side battery packs. The plurality of left-hand side battery packs may be arranged to be bilaterally symmetric, the plurality of right-hand side battery packs may be arranged to be bilaterally symmetric, and the management unit may be configured to, when causing two or more of the plurality of battery packs to be discharged bilaterally symmetrically at a time in order in each of the plurality of left-hand side battery packs and the plurality of right-hand side battery packs, manage the plurality of battery packs to cause discharging to be performed bilaterally symmetrically in order also in the plurality of left-hand side battery packs and the plurality of right-hand side battery packs. The management unit may be configured to manage a charging order of the plurality of battery packs based on a remaining capacity of each of the plurality of battery packs. The management unit may be configured to manage the plurality of battery packs so that charging is performed in order from a battery pack having a lowest remaining capacity out of the plurality of battery packs. The plurality of battery packs may be arranged in a wing portion of an aircraft which provides a wireless communication service to a user terminal located within a communication area formed by irradiating beams toward a ground. The system may further include the plurality of battery packs. The battery pack may be a battery that uses lithium in an anode. The battery pack may be a lithium ion battery. The management unit may be configured to manage so as to switch the battery pack to be discharged every time a predetermined time elapses. The management unit may be configured to manage so as to switch the battery pack to be discharged for each predetermined electrical power amount. The management unit may be configured to perform control so as to simultaneously charge a plurality of battery packs out of the plurality of battery packs. The management unit may be configured to vary the number of battery packs to be charged simultaneously in time series. The management unit may be configured to perform control so as to simultaneously charge all of the plurality of battery packs.

A second aspect of the present invention provides a program for causing a computer to function as: a management unit configured to manage a plurality of battery packs connected in parallel, the management unit being configured to manage the plurality of battery packs to cause the plurality of battery packs to be discharged alternately so that a discharge rate of each of the plurality of battery packs becomes higher than the discharge rate in a case of discharging all of the plurality of battery packs.

A third aspect of the present invention provides a management method executed by a computer, for managing a plurality of battery packs connected in parallel. The management method may include: managing the plurality of battery packs to cause the plurality of battery packs to be discharged alternately so that a discharge rate of each of the plurality of battery packs becomes higher than the discharge rate in a case of discharging all of the plurality of battery packs.

A fourth aspect of the present invention provides an aircraft. The aircraft may include a wing portion and a plurality of battery packs arranged in the wing portion while being connected in parallel. The aircraft may include a management unit configured to manage the plurality of battery packs, the management unit being configured to manage the plurality of battery packs to cause the plurality of battery packs to be discharged alternately so that a discharge rate of each of the plurality of battery packs becomes higher than the discharge rate in a case of discharging all of the plurality of battery packs. The aircraft may include a communication control unit configured to provide a wireless communication service to a user terminal located within a communication area formed by irradiating beams toward a ground using electrical power discharged by the plurality of battery packs. The aircraft may include an electrical power generation unit configured to execute solar power generation, and the management unit may be configured to manage at least one of a charging order or a charge amount of the plurality of battery packs by electrical power generated by the electrical power generation unit, based on a remaining capacity of each of the plurality of battery packs.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of a system 10.
Fig. 2 schematically shows an example of the system 10.
Fig. 3 schematically shows an example of a flow of a current during discharging in the system 10.
Fig. 4 schematically shows an example of a flow of a current during charging in the system 10.
Fig. 5 schematically shows an example of the flow of a current during charging in the system 10.
Fig. 6 schematically shows an example of a HAPS 500.
Fig. 7 schematically shows an example of a hardware configuration of a computer 1200 that functions as a management unit 100.

### DESCRIPTION OF EXEMPLARY EMBODIMENTS

Hereinafter, the present invention will be described through an embodiment of the invention, but the following embodiment does not limit the invention according to the claims. In addition, not all combinations of features described in the embodiment are essential to the solution of the invention.

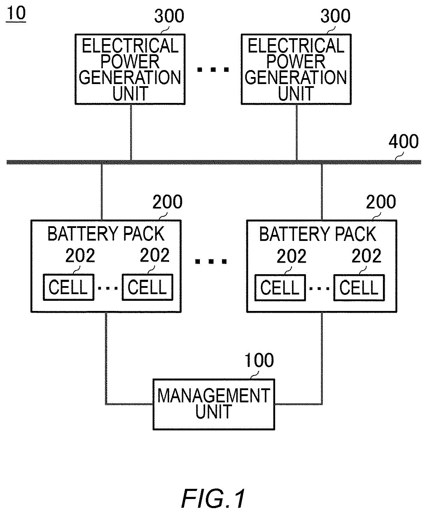

Fig. 1 schematically shows an example of a system 10. The system 10 includes a management unit 100. The management unit 100 manages a plurality of battery packs 200 connected in parallel. The system 10 may also include the plurality of battery packs 200. In the example shown in Fig. 1, each of the plurality of battery packs 200 is connected to a bus 400. Any target that uses electricity discharged by the plurality of battery packs 200 can be connected to the bus 400.

The battery pack 200 includes a plurality of cells 202. A battery type of the battery pack 200 may be any type. The battery pack 200 is a battery in which lithium is used in an anode, for example. The battery pack 200 is, for example, a lithium ion battery.

The system 10 may include a plurality of electrical power generation units 300. The plurality of electrical power generation units 300 supply generated electrical power to the battery packs 200. An electrical power generation technique by the electrical power generation units 300 may be any electrical power generation technique such as solar power generation, for example. In the example shown in Fig. 1, the plurality of electrical power generation units 300 are connected to the bus 400.

A battery that uses a lithium metal anode in particular has characteristics that a discharge rate is low and a deterioration rate is high. As one solution, a technique that alternately uses cells in a pack to raise a discharge rate per cell is proposed. However, for switching the cells in a pack, a switching component becomes necessary, and this causes an increase of a pack weight and an increase of costs.

The management unit 100 according to the present embodiment manages the plurality of battery packs 200 to cause the plurality of battery packs 200 to be discharged alternately so that a discharge rate of each of the plurality of battery packs 200 becomes higher than the discharge rate in a case of discharging all of the plurality of battery packs 200 at the same time.

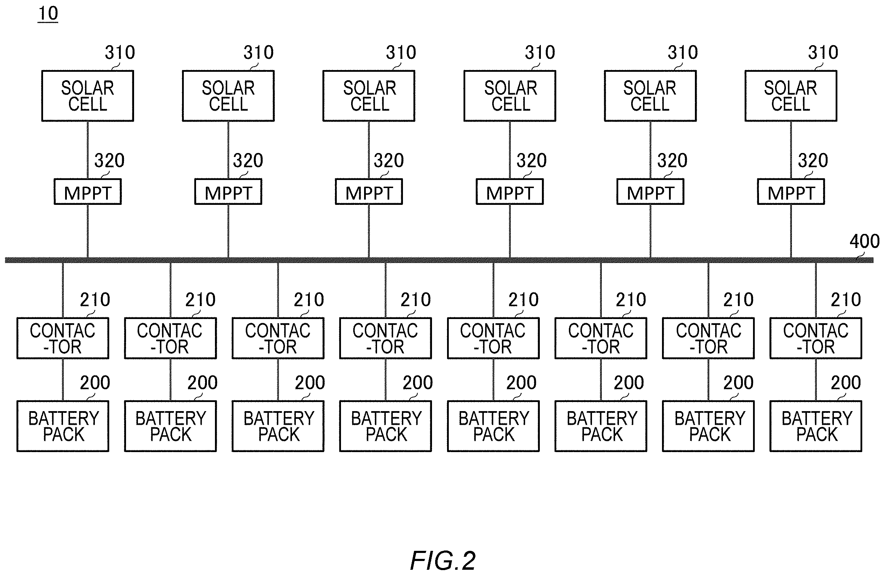

Fig. 2 schematically shows an example of the system 10. In the example shown in Fig. 2, each of the plurality of battery packs 200 is connected to the bus 400 via a contactor 210. Further, a plurality of solar cells 310 are connected to the bus 400 via MPPTs (Maximum Power Point Tracking) 320. The solar cell 310 may be an example of the electrical power generation unit 300.

In the example shown in Fig. 2, the plurality of battery packs 200 include four left-hand side battery packs and four right-hand side battery packs that are arranged to be bilaterally symmetric. When distinguishably describing the battery packs 200, the battery packs 200 may be referred to as, from the left-hand side to the right-hand side, a first battery pack 200, a second battery pack 200, a third battery pack 200, a fourth battery pack 200, a fifth battery pack 200, a sixth battery pack 200, a seventh battery pack 200, and an eighth battery pack 200.

When distinguishably describing the contactors 210, the contactors 210 may be referred to as, from the left-hand side to the right-hand side, a first contactor 210, a second contactor 210, a third contactor 210, a fourth contactor 210, a fifth contactor 210, a sixth contactor 210, a seventh contactor 210, and an eighth contactor 210.

The management unit 100 may manage the plurality of battery packs 200 to cause at least one of the battery packs 200 in each of the plurality of left-hand side battery packs 200 and the plurality of right-hand side battery packs 200 to be discharged bilaterally symmetrically at a time in order. The management unit 100 may control the plurality of contactors 210 to cause at least one of the battery packs 200 in each of the plurality of left-hand side battery packs 200 and the plurality of right-hand side battery packs 200 to be discharged bilaterally symmetrically at a time in order.

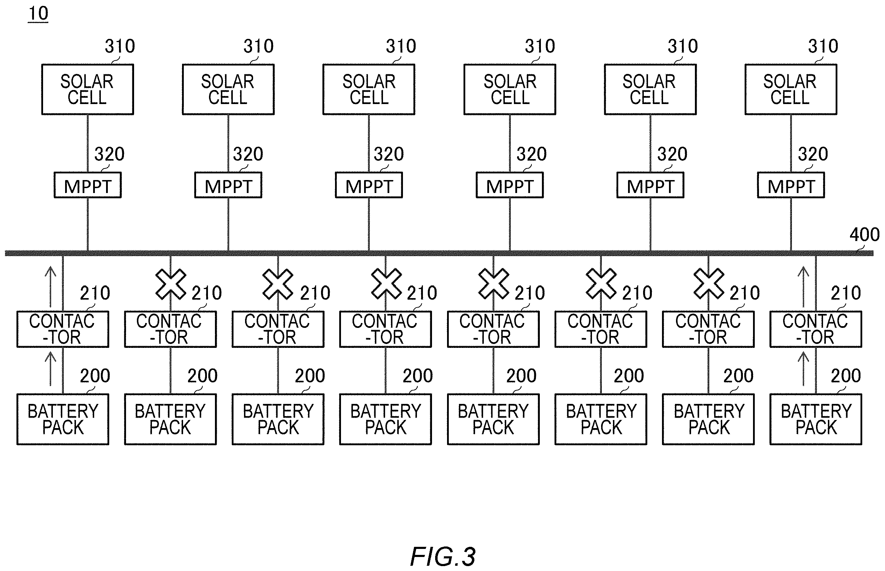

Fig. 3 schematically shows an example of a flow of a current during discharging in the system 10. For example, the management unit 100 controls the plurality of contactors 210 so that the first battery pack 200 and the eighth battery pack 200, the second battery pack 200 and the seventh battery pack 200, the third battery pack 200 and the sixth battery pack 200, and the fourth battery pack 200 and the fifth battery pack 200 are discharged in the stated order.

Fig. 3 exemplifies a state where the first battery pack 200 and the eighth battery pack 200 are discharged. The management unit 100 may cause the first battery pack 200 and the eighth battery pack 200 to be discharged by performing control to open the first contactor 210 and the eighth contactor 210 without opening the second contactor 210 to the seventh contactor 210.

By causing two battery packs 200, out of the eight battery packs 200 as described above, to be discharged alternately at a time, a discharge rate of the battery packs 200 can be made 4 times the discharge rate in a case of discharging all of the eight battery packs 200. By raising the discharge rate, a lifetime of the battery packs 200 can be prolonged as compared to a case where the discharge rate is not raised.

The management unit 100 may manage so as to switch the battery packs 200 to be discharged every time a predetermined time elapses. For example, the management unit 100 first starts discharging the first battery pack 200 and the eighth battery pack 200, and, at a timing at which a predetermined time has elapsed, starts discharging the second battery pack 200 and the seventh battery pack 200 and stops discharging the first battery pack 200 and the eighth battery pack 200. Next, at a timing at which a predetermined time has elapsed since starting discharging of the second battery pack 200 and the seventh battery pack 200, the management unit 100 starts discharging the third battery pack 200 and the sixth battery pack 200 and stops discharging the second battery pack 200 and the seventh battery pack 200. Next, at a timing at which a predetermined time has elapsed since starting discharging of the third battery pack 200 and the sixth battery pack 200, the management unit 100 starts discharging the fourth battery pack 200 and the fifth battery pack 200 and stops discharging the third battery pack 200 and the sixth battery pack 200. Next, at a timing at which a predetermined time has elapsed since starting discharging of the fourth battery pack 200 and the fifth battery pack 200, the management unit 100 starts discharging the first battery pack 200 and the eighth battery pack 200 and stops discharging the fourth battery pack 200 and the fifth battery pack 200. The management unit 100 may repeat such control.

The management unit 100 may also manage so as to switch the battery packs 200 to be discharged for each predetermined electrical power amount. For example, the management unit 100 first starts discharging the first battery pack 200 and the eighth battery pack 200, and, at a timing at which a predetermined electrical power amount has been discharged, starts discharging the second battery pack 200 and the seventh battery pack 200 and stops discharging the first battery pack 200 and the eighth battery pack 200. Next, at a timing at which a predetermined electrical power amount has been discharged by the second battery pack 200 and the seventh battery pack 200, the management unit 100 starts discharging the third battery pack 200 and the sixth battery pack 200 and stops discharging the second battery pack 200 and the seventh battery pack 200. Next, at a timing at which a predetermined electrical power amount has been discharged by the third battery pack 200 and the sixth battery pack 200, the management unit 100 starts discharging the fourth battery pack 200 and the fifth battery pack 200 and stops discharging the third battery pack 200 and the sixth battery pack 200. Next, at a timing at which a predetermined electrical power amount has been discharged by the fourth battery pack 200 and the fifth battery pack 200, the management unit 100 starts discharging the first battery pack 200 and the eighth battery pack 200 and stops discharging the fourth battery pack 200 and the fifth battery pack 200. The management unit 100 may repeat such control.

The management unit 100 may also manage so as to switch the battery packs 200 to be discharged according to remaining capacities of the battery packs 200. For example, the management unit 100 first starts discharging the first battery pack 200 and the eighth battery pack 200, and, at a timing at which the remaining capacity of at least one of the first battery pack 200 or the eighth battery pack 200 falls below a predetermined threshold or becomes zero, starts discharging the second battery pack 200 and the seventh battery pack 200 and stops discharging the first battery pack 200 and the eighth battery pack 200. Next, at a timing at which the remaining capacity of at least one of the second battery pack 200 or the seventh battery pack 200 falls below a predetermined threshold or becomes zero, the management unit 100 starts discharging the third battery pack 200 and the sixth battery pack 200 and stops discharging the second battery pack 200 and the seventh battery pack 200. Next, at a timing at which the remaining capacity of at least one of the third battery pack 200 or the sixth battery pack 200 falls below a predetermined threshold or becomes zero, the management unit 100 starts discharging the fourth battery pack 200 and the fifth battery pack 200 and stops discharging the third battery pack 200 and the fourth battery pack 200.

The management unit 100 may perform control so as to cause a predetermined number of battery packs 200 to be discharged simultaneously, for each of the plurality of left-hand side battery packs 200 and the plurality of right-hand side battery packs 200. For example, the management unit 100 first causes the first battery pack 200, the fourth battery pack 200, the fifth battery pack 200, and the eighth battery pack 200 to be discharged, and next causes the second battery pack 200, the third battery pack 200, the sixth battery pack 200, and the seventh battery pack 200 to be discharged.

As described above, when discharging two or more of each of the plurality of left-hand side battery packs 200 and the plurality of right-hand side battery packs 200 bilaterally symmetrically at a time in order, the management unit 100 may manage the plurality of battery packs so that the battery packs 200 are discharged bilaterally symmetrically in order also in the plurality of left-hand side battery packs 200 and the plurality of right-hand side battery packs 200. Accordingly, the discharging can be balanced.

The management unit 100 may manage the plurality of battery packs 200 to cause the plurality of battery packs 200 to be discharged bilaterally symmetrically in order by a number corresponding to a type of cells 202 included in the plurality of battery packs 200 at a time, in the plurality of left-hand side battery packs 200 and the plurality of right-hand side battery packs 200. For example, the management unit 100 determines the number of battery packs 200 corresponding to the type of the cells 202 by referencing registration information in which the number of battery packs 200 to be discharged is registered for each type of the cells 202. For example, the management unit 100 stores registration information preset by a user of the system 10 or the like. For example, the user of the system 10 or the like can perform an experiment for each type of the cells 202 and register the number of battery packs 200 to be discharged for each type of the cells 202 in the registration information so that a discharge rate becomes 0.5 C to 1.0 C. As described above, if the discharge rate is too low, the deterioration rate increases, and if the discharge rate is too high, a voltage drop occurs to thus cause a reduction of a capacity. In contrast, by the management unit 100 managing so as to cause discharging by the number corresponding to the type of the cells 202 included in the plurality of battery packs 200 at a time, both the deterioration of the battery packs 200 and the reduction of the capacity can be suppressed.

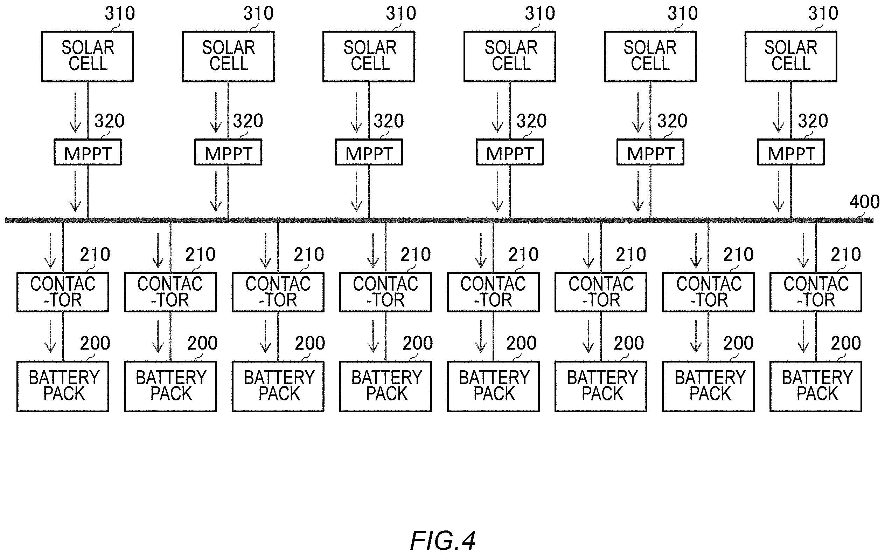

Fig. 4 schematically shows an example of a flow of a current during charging in the system 10. As exemplified in Fig. 4, the management unit 100 may perform control so as to simultaneously charge all of the battery packs 200. For example, when electrical power generation by a plurality of solar cells 310 is started, the management unit 100 performs control so as to open all of the contactors 210 to simultaneously supply electrical power to all of the battery packs 200.

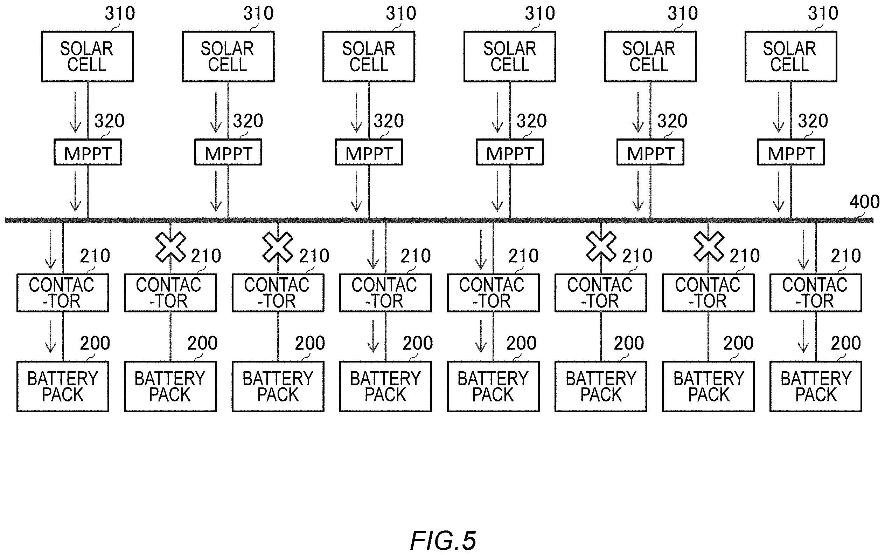

Fig. 5 schematically shows an example of the flow of a current during charging in the system 10. The management unit 100 does not need to simultaneously charge the plurality of battery packs 200. For example, the management unit 100 performs control to charge the plurality of battery packs 200 in order.

As a specific example, the management unit 100 manages a charging order of the plurality of battery packs 200 based on the remaining capacities of the plurality of the battery packs 200. For example, the management unit 100 manages so as to charge the plurality of battery packs 200 in order from a battery pack 200 having a lowest remaining capacity.

Fig. 5 exemplifies a charging state in a case where the remaining capacities of the first battery pack 200, the fourth battery pack 200, the fifth battery pack 200, and the eighth battery pack 200 are lower than those of the second battery pack 200, the third battery pack 200, the sixth battery pack 200, and the seventh battery pack 200. The management unit 100 opens the first contactor 210, the fourth contactor 210, the fifth contactor 210, and the eighth contactor 210 without opening the second contactor 210, the third contactor 210, the sixth contactor 210, and the seventh contactor 210, to first charge the first battery pack 200, the fourth battery pack 200, the fifth battery pack 200, and the eighth battery pack 200.

Then, for example, in accordance with the completion of the charging of the first battery pack 200, the fourth battery pack 200, the fifth battery pack 200, and the eighth battery pack 200, the management unit 100 closes the first contactor 210, the fourth contactor 210, the fifth contactor 210, and the eighth contactor 210 and opens the second contactor 210, the third contactor 210, the sixth contactor 210, and the seventh contactor 210. Accordingly, it becomes possible to contribute to prevention of overcharge of the battery packs 200.

Alternatively, for example, in response to the remaining capacities of the first battery pack 200, the fourth battery pack 200, the fifth battery pack 200, and the eighth battery pack 200 becoming higher than a predetermined threshold, the management unit 100 also opens the second contactor 210, the third contactor 210, the sixth contactor 210, and the seventh contactor 210.

The management unit 100 may vary the number of battery packs 200 to be charged simultaneously in time series. As a specific example, the management unit 100 first opens all of the contactors 210 to charge all of the battery packs 200, and closes the contactors 210 of the battery packs 200 whose remaining capacities have become higher than a predetermined threshold. Accordingly, it becomes possible to contribute to prevention of overcharge of the battery packs 200.

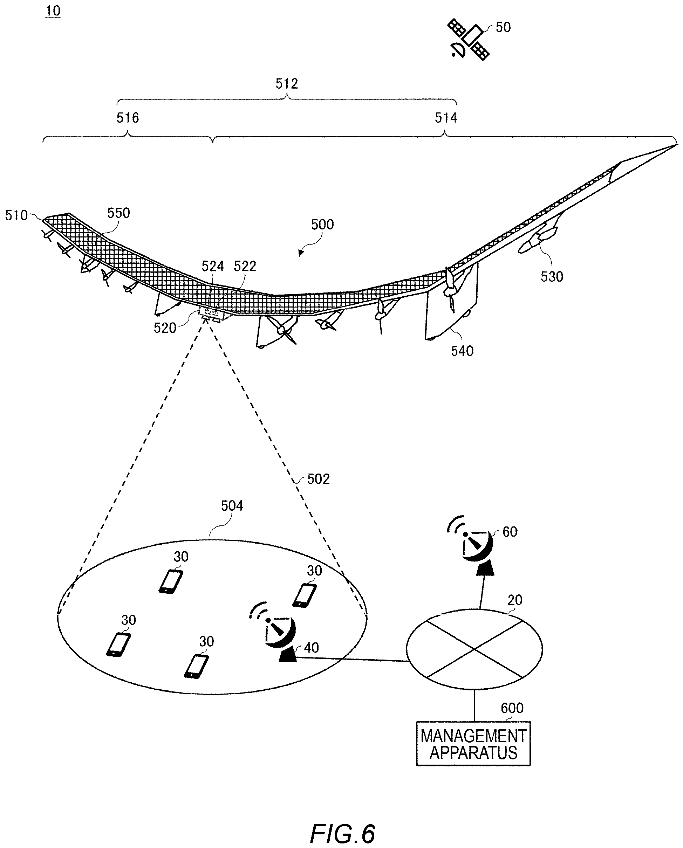

Fig. 6 schematically shows an example of a HAPS 500. The HAPS 500 may be an example of an aircraft that provides a wireless communication service to a user terminal 30 located within a communication area 504 formed by irradiating beams 502 toward the ground.

The HAPS 500 includes a fuselage 510, a center portion 520, a propeller 530, a pod 540, and a solar panel 550. The fuselage 510 includes a wing portion 512. The wing portion 512 includes a left wing portion 514 and a right wing portion 516.

The plurality of battery packs 200 connected in parallel are arranged inside the wing portion 512. Of the plurality of battery packs 200, the plurality of left-hand side battery packs 200 may be arranged in the left wing portion 514, and the plurality of right-hand side battery packs 200 may be arranged in the right wing portion 516. The plurality of battery packs 200 may be connected to the bus 400 via the plurality of contactors 210. The solar panel 550 may be connected to the bus 400 via the MPPTs 320. Electrical power discharged by the plurality of battery packs 200 is used by the respective configurations provided in the HAPS 500.

A flight control apparatus 522 and a communication control apparatus 524 are arranged in the center portion 520. The flight control apparatus 522 controls a flight of the HAPS 500 using electrical power discharged by the plurality of battery packs 200. The communication control apparatus 524 controls communication of the HAPS 500 using electrical power discharged by the plurality of battery packs 200.

For example, the flight control apparatus 522 controls rotations of the propeller 530 to control the flight of the HAPS 500. Also, the flight control apparatus 522 may control the flight of the HAPS 500 by changing an angle of a flap or an elevator which are not shown. The flight control apparatus 522 may include various sensors such as a positioning sensor such as a GPS sensor, a gyroscope sensor, and an acceleration sensor, to manage a position, a moving direction, and a moving speed of the HAPS 500.

The communication control apparatus 524 forms the communication area 504 on the ground using an SL (Service Link) antenna. The communication control apparatus 524 forms a service link with the user terminal 30 on the ground using the SL antenna. The SL antenna may be a multi-beam antenna. The communication area 504 may be multicellular.

The communication control apparatus 524 may form a feeder link with respect to a gateway 40 on the ground using an FL (Feeder Link) antenna. The communication control apparatus 524 may access a network 20 via the gateway 40.

The communication control apparatus 524 may communicate with a communication satellite 50 using a satellite communication antenna. The communication control apparatus 524 may access the network 20 via the communication satellite 50 and a satellite communication station 60.

The user terminal 30 may be any communication terminal as long as it can communicate with the HAPS 500. For example, the user terminal 30 is a mobile phone such as a smartphone. The user terminal 30 may be a tablet terminal, a PC (Personal Computer), and the like. The user terminal 30 may also be a so-called IoT (Internet of Thing) device. The user terminal 30 may include all things corresponding to a so-called IoE (Internet of Everything).

For example, the HAPS 500 relays communication between the network 20 and the user terminal 30 via the feeder link or the communication satellite 50 and the service link. The HAPS 500 may provide the user terminal 30 with a wireless communication service by relaying the communication between the user terminal 30 and the network 20.

The network 20 includes a mobile communication network. The mobile communication network may comply with any of a 3G (3rd Generation) communication scheme, an LTE (Long Term Evolution) communication scheme, a 5G (5th Generation) communication scheme, and a 6G (6th Generation) communication scheme and subsequent communication schemes. The network 20 may include the Internet.

For example, the HAPS 500 transmits data received from the user terminal 30 located within the communication area 504 to the network 20. Further, for example, when receiving data destined for the user terminal 30 located within the communication area 504 via the network 20, the HAPS 500 transmits the data to the user terminal 30.

A management apparatus 600 manages a plurality of HAPSs 500. The management apparatus 600 may communicate with the HAPS 500 via the network 20 and the gateway 40. The management apparatus 600 may communicate with the HAPS 500 via the network 20, the satellite communication station 60, and the communication satellite 50.

The management apparatus 600 controls the HAPS 500 by transmitting instructions. The management apparatus 600 may cause the HAPS 500 to circle in the sky above a target area so that the communication area 504 covers the target area on the ground. For example, while flying in a circular orbit in the sky above a target area, the HAPS 500 maintains the feeder link with respect to the gateway 40 by adjusting an orientation direction of the FL antenna, and maintains the coverage of the target area by the communication area 504 by adjusting an orientation direction of the SL antenna.

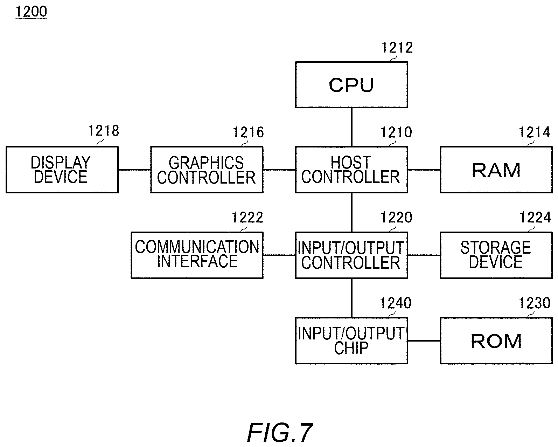

Fig. 7 schematically shows an example of a hardware configuration of a computer 1200 that functions as the management unit 100. Programs installed in the computer 1200 can cause the computer 1200 to function as one or more "units" of the apparatuses according to the present embodiment or can cause the computer 1200 to execute operations associated with the apparatuses according to the present embodiment or the one or more "units", and/or can cause the computer 1200 to execute a process according to the present embodiment or steps of the process. Such a program may be executed by a CPU 1212 to cause the computer 1200 to perform specific operations associated with some or all of the blocks in the flow charts and block diagrams described in the specification.

The computer 1200 according to the present embodiment includes the CPU 1212, a RAM 1214, and a graphics controller 1216, which are connected to each other via a host controller 1210. Also, the computer 1200 includes input/output units such as a communication interface 1222, a storage device 1224, a DVD drive, and an IC card drive, which are connected to the host controller 1210 via an input/output controller 1220. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates according to the programs stored in the ROM 1230 and the RAM 1214, thereby controlling each unit. The graphics controller 1216 obtains image data which is generated, by the CPU 1212, in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The IC card drive reads programs and data from an IC card, and/or writes programs and data into the IC card.

The ROM 1230 stores therein a boot program or the like executed by the computer 1200 at the time of activation, and/or a program depending on the hardware of the computer 1200. The input/output chip 1240 may also connect various input/output units to the input/output controller 1220 via a USB port, a parallel port, a serial port, a keyboard port, a mouse port, or the like.

A program is provided by a computer-readable storage medium such as the DVD-ROM or the IC card. The program is read from the computer-readable storage medium, installed into the storage device 1224, RAM 1214, or ROM 1230, which are also examples of the computer-readable storage medium, and executed by the CPU 1212. The information processing described in these programs is read into the computer 1200, resulting in cooperation between a program and the above-described various types of hardware resources. An apparatus or method may be constituted by realizing the operation or processing of information in accordance with the usage of the computer 1200.

For example, when communication is performed between the computer 1200 and an external device, the CPU 1212 may execute a communication program loaded onto the RAM 1214 to instruct communication processing to the communication interface 1222, based on the processing described in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), and the IC card, and perform various types of processing on the data on the RAM 1214. The CPU 1212 may then write back the processed data to the external recording medium.

Various types of information, such as various types of programs, data, tables, and databases, may be stored in the recording medium to undergo information processing. The CPU 1212 may perform various types of processing on the data read from the RAM 1214, which includes various types of operations, information processing, condition judging, conditional branch, unconditional branch, search/replacement of information, and the like, as described throughout the present disclosure and designated by an instruction sequence of programs, and writes the result back to the RAM 1214. In addition, the CPU 1212 may search for information in a file, a database, and the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute satisfying the predetermined condition.

The programs or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flow charts and block diagrams in the present embodiment may represent steps of processes in which operations are performed or "units" of apparatuses responsible for performing operations. Certain steps and "units" may be implemented by dedicated circuitry, programmable circuitry supplied with computer-readable instructions stored on a computer-readable storage medium, and/or processors supplied with computer-readable instructions stored on a computer-readable storage medium. Dedicated circuitry may include digital and/or analog hardware circuits and may include integrated circuits (IC) and/or discrete circuits. For example, programmable circuitry may include reconfigurable hardware circuits including logical AND, OR, XOR, NAND, NOR, and other logical operations, flip-flops, registers, and memory elements, such as field-programmable gate arrays (FPGA) and programmable logic arrays (PLA).

A computer-readable storage medium may include any tangible device that can store instructions for execution by a suitable device, such that the computer-readable storage medium having instructions stored therein includes an article of manufacture including instructions which can be executed to create means for performing operations specified in the flow charts or block diagrams. Examples of the computer-readable storage medium may include an electronic storage medium, a magnetic storage medium, an optical storage medium, an electromagnetic storage medium, a semiconductor storage medium, and the like. More specific examples of computer-readable storage media may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY(registered trademark) disc, a memory stick, an integrated circuit card, and the like.

Computer-readable instructions may include any of assembler instructions, instruction-set-architecture (ISA) instructions, machine instructions, machine dependent instructions, microcode, firmware instructions, state-setting data, or either source code or object code described in any combination of one or more programming languages, including an object oriented programming language such as Smalltalk (registered trademark), JAVA (registered trademark), and C++, and conventional procedural programming languages such as the "C" programming language or similar programming languages.

Computer-readable instructions may be provided to a processor of a general-purpose computer, a special-purpose computer, or other programmable data processing apparatuses, or to programmable circuitry, locally or via a local area network (LAN) or a wide area network (WAN) such as the Internet, so that the processor of the general-purpose computer, special-purpose computer, or other programmable data processing apparatuses, or the programmable circuitry executes the computer-readable instructions to create means for performing operations specified in the flow charts or block diagrams. Examples of processors include computer processors, processing units, microprocessors, digital signal processors, controllers, microcontrollers, and the like.

While the embodiments of the present invention have been described, the technical scope of the invention is not limited to the above described embodiments. It is apparent to persons skilled in the art that various alterations and improvements can be added to the above described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: system; 20: network; 30: user terminal; 40: gateway; 50: communication satellite; 60: satellite communication station; 100: management unit; 200: battery pack; 210: contactor; 300: electrical power generation unit; 310: solar cell; 320: MPPT; 400: bus; 500: HAPS; 502: beam; 504: communication area; 510: fuselage; 512: wing portion; 514: left wing portion; 516: right wing portion; 520: center portion; 522: flight control apparatus; 524: communication control apparatus; 530: propeller; 540: pod; 550: solar panel; 600: management apparatus; 1200: computer; 1210: host controller; 1212: CPU; 1214: RAM; 1216: graphics controller; 1218: device; 1220: input/output controller; 1222: communication interface; 1224: storage device; 1230: ROM; 1240: input/output chip

## Claims

1. A system, comprising:
a management unit configured to manage a plurality of battery packs connected in parallel,
wherein the management unit is configured to manage the plurality of battery packs to cause the plurality of battery packs to be discharged alternately so that a discharge rate of each of the plurality of battery packs becomes higher than the discharge rate in a case of discharging all of the plurality of battery packs.

2. The system according to claim 1, wherein
the plurality of battery packs include a plurality of left-hand side battery packs and a plurality of right-hand side battery packs which are arranged to be bilaterally symmetric, and
the management unit is configured to manage the plurality of battery packs to cause at least one of the plurality of battery packs in each of the plurality of left-hand side battery packs and the plurality of right-hand side battery packs to be discharged bilaterally symmetrically at a time in order.

3. The system according to claim 2, wherein
the management unit is configured to manage the plurality of battery packs to cause the plurality of battery packs to be discharged bilaterally symmetrically in order by a number corresponding to a type of cells included in the plurality of battery packs at a time, in the plurality of left-hand side battery packs and the plurality of right-hand side battery packs.

4. The system according to claim 2, wherein
the plurality of left-hand side battery packs are arranged to be bilaterally symmetric,
the plurality of right-hand side battery packs are arranged to be bilaterally symmetric, and
the management unit is configured to, when causing two or more of the plurality of battery packs to be discharged bilaterally symmetrically at a time in order in each of the plurality of left-hand side battery packs and the plurality of right-hand side battery packs, manage the plurality of battery packs to cause discharging to be performed bilaterally symmetrically in order also in the plurality of left-hand side battery packs and the plurality of right-hand side battery packs.

5. The system according to any one of claims 1 to 4, wherein
the management unit is configured to manage a charging order of the plurality of battery packs based on a remaining capacity of each of the plurality of battery packs.

6. The system according to claim 5, wherein
the management unit is configured to manage the plurality of battery packs so that charging is performed in order from a battery pack having a lowest remaining capacity out of the plurality of battery packs.

7. The system according to any one of claims 1 to 6, wherein
the plurality of battery packs are arranged in a wing portion of an aircraft which provides a wireless communication service to a user terminal located within a communication area formed by irradiating beams toward a ground.

8. The system according to any one of claims 1 to 7, further comprising the plurality of battery packs.

9. A program for causing a computer to function as:
a management unit configured to manage a plurality of battery packs connected in parallel, the management unit being configured to manage the plurality of battery packs to cause the plurality of battery packs to be discharged alternately so that a discharge rate of each of the plurality of battery packs becomes higher than the discharge rate in a case of discharging all of the plurality of battery packs.

10. A management method executed by a computer, for managing a plurality of battery packs connected in parallel, the management method comprising:
managing the plurality of battery packs to cause the plurality of battery packs to be discharged alternately so that a discharge rate of each of the plurality of battery packs becomes higher than the discharge rate in a case of discharging all of the plurality of battery packs.

11. An aircraft, comprising:
a wing portion;
a plurality of battery packs arranged in the wing portion while being connected in parallel;
a management unit configured to manage the plurality of battery packs, the management unit being configured to manage the plurality of battery packs to cause the plurality of battery packs to be discharged alternately so that a discharge rate of each of the plurality of battery packs becomes higher than the discharge rate in a case of discharging all of the plurality of battery packs; and
a communication control unit configured to provide a wireless communication service to a user terminal located within a communication area formed by irradiating beams toward a ground using electrical power discharged by the plurality of battery packs.

12. The aircraft according to claim 11, comprising:
an electrical power generation unit configured to execute solar power generation,
wherein the management unit is configured to manage at least one of a charging order or a charge amount of the plurality of battery packs by electrical power generated by the electrical power generation unit, based on a remaining capacity of each of the plurality of battery packs.
